# EUROPÄISCHE PATENTSCHRIFT

(11) **EP 1 354 160 B1**
(45) Veröffentlichungstag und Bekanntmachung des Hinweises auf die Patenterteilung: **27.04.2005**
(21) Anmeldenummer: 02710656.6
(22) Anmeldetag: 25.01.2002
(51) Int. Cl.: F16L 3/26, H02G 3/04

(54) **VORRICHTUNG ZUR BEFESTIGUNG VON LEITUNGEN**
DEVICE FOR THE FIXING OF LINES
DISPOSITIF DE FIXATION DE CONDUITES

(30) Priorität: 26.01.2001 AT 1342001
(43) Veröffentlichungstag der Anmeldung: 22.10.2003
(73) Patentinhaber: Wien Kanal-Abwassertechnologien GesmbH, 1030 Wien (AT)
(72) Erfinder: KADRNOSKA, Helmut, A-1120 Wien (AT); REISS, Gerhard, A-1130 Wien (AT)
(74) Vertreter: Wildhack, Helmut, Dipl.-Ing. Dr.
(86) Internationale Anmeldenummer: PCT/AT2002/000033
(87) Internationale Veröffentlichungsnummer: WO 2002/059517

(56) Entgegenhaltungen:
- DE-A- 4 205 812
- DE-U- 8 010 670
- PATENT ABSTRACTS OF JAPAN vol. 2000, no. 02, 29. Februar 2000 (2000-02-29) & JP 11 311369 A (SEKISUI CHEM CO LTD;KUBOTA CORP), 9. November 1999 (1999-11-09)

## Beschreibung

Die Erfindung betrifft eine Vorrichtung zur Befestigung von Leitungen, wie Rohren, Schläuchen, Kabel od.dgl., von Bauwerken, beispielsweise an der Innenwand von Abwasserkanälen, mit einem die Leitungen aufnehmenden Leitungskanal, der an seiner der Wand des Bauwerkes zugewendeten Seite eine Öffnung aufweist, und über in Leitungskanallängsrichtung in Abstand voneinander an der Wand befestigbare Montagebügel fixierbar ist.

Es ist bekannt, unter der Straßenoberfläche verlaufende Abwasserkanäle für die Verlegung von Leitungen heranzuziehen, da in diesem Fall Grabungsarbeiten weitgehend vermieden werden können. Zur Verlegung dieser Leitungen werden Kabeltassen verwendet, die einen im wesentlichen U-förmigen, oben offenen Querschnitt aufweisen und mit einem Schenkel des U an der Wand des Abwasserkanals befestigt werden. Nachteilig ist bei dieser Ausführungsform, dass die darin verlegten Leitungen in unzureichender Weise geschützt sind und sich beispielsweise mit dem Abwasser mitgeführtes Schwemmgut in den Kabeltassen festsetzen und die Leitungen beschädigen kann.

Aus der DE 42 05 812 A1 ist eine Vorrichtung der eingangs genannten Art bekannt. Dabei sind zur Bildung eines Unterflurkanals auf einem Unterboden, auf den anschließend Estrich aufgefüllt wird, aus Kunststoff bestehende wannenförmige Kanalelemente vorgesehen, die Stützflansche aufweisen. Die Kanalelemente haben längslaufende oder noppenförmige Ausformungen, um zwei benachbarte Kanalelemente miteinander zu verbinden. Das Verbinden erfolgt mit einer über die stumpf gegeneinanderstoßenden Kanalelemente gelegten Schelle, deren Ausformungen mit den Ausformungen der Kanalelemente rastend zusammengreifen oder durch Überlappen der Endbereiche der Kanalelemente, wobei Ausformungen der Kanalelemente rastend ineinandergreifen.

Die vorliegende Erfindung hat sich zur Aufgabe gestellt, eine Vorrichtung zur Befestigung von Leitungen der eingangs beschriebenen Art zu schaffen, die einfach montiert werden kann und einen hinreichenden Schutz der Leitungen gegen das im Abwasser mitgeführte Schwemmgut gewährleistet. Zur Lösung dieser Aufgabe schlägt die Erfindung die im Kennzeichen des Anspruches 1 angeführten Merkmale vor. Bei Anwendung der erfindungsgemäßen Vorrichtung werden die Leitungen vollständig vom Leitungskanal aufgenommen, wobei diese Leitungen über die Öffnung in den Leitungskanal eingesetzt werden und die Öffnung dadurch, dass die die Öffnung aufweisende Seite des Leitungskanals der Wand des Bauwerkes zugewendet ist, durch diese Wand abgeschlossen wird. Die in Abstand voneinander angeordneten Montagebügel, deren Befestigung über die abstehenden Befestigungsflansche erfolgt, sichern die Fixierung des Leitungskanals an der Wand des Bauwerkes.

Der Leitungskanal weist vorzugsweise die Querschnittsform eines U auf und ist gegebenenfalls mit nach innen abgebogenen Schenkelenden versehen. Diese Schenkelenden üben auf die vom Leitungskanal aufgenommenen Leitungen eine Spannkraft aus, wodurch diese Leitungen in ihrer Lage im Leitungskanal gehalten werden.

Im einfachsten Fall können die Befestigungsflansche unmittelbar mit der Wand des Bauwerkes verbunden werden. Zweckmäßig ist es jedoch, wenn eine an der Wand des Bauwerkes befestigbare bzw. angeordnete Grundplatte vorgesehen ist, an welcher die Befestigungsflanschen lösbar befestigt sind. Bei dieser Ausführung kann zunächst die Grundplatte in den vorgegebenen Abständen an der Wand des Bauwerkes fixiert werden. Dazu werden vorzugsweise von der Wand vorstehende Gewindestangen in die Wand eingedübelt oder es wird die Grundplatte an die Wand angeschraubt. Anschließend werden die Leitungen in den Leitungskanal eingelegt und es erfolgt dann die Fixierung des Leitungskanals dadurch, dass die den Leitungskanal umgebenden Montagebügel mittels ihrer Befestigungsflansche an der Grundplatte befestigt werden. Hiezu können von der Grundplatte abstehende Bolzen, insbesondere Schraubenbolzen vorgesehen sein, die Löcher in den Befestigungsflanschen durchsetzen.

Die Montagebügel bestehen aus zwei miteinander verbundenen Teilen bestehen. Diese Teile können beispielsweise lösbar über eine Schraubverbindung miteinander verbunden sein. Vorteilhafterweise trägt ein Teil einen Niet, der durch eine Ausnehmung im anderen Teil verläuft, sodass dieser Teil um den Niet verschwenkbar ist.

Die beiden Teile sind miteinander schwenkbar verbunden, wobei die Schwenkachse im wesentlichen senkrecht zur Leitungskanallängsrichtung verläuft. Eine solche Ausführung bringt den Vorteil mit sich, dass nach einem Lockern der Befestigung der Montagebügel an der Wand des Bauwerkes bzw. an der Grundplatte durch ein Lösen der Verbindung zwischen den beiden Teilen bzw. vorzugsweise durch ein Verschwenken eines Teiles relativ zum anderen Teil und/oder Wegbiegen des Montagebügels von der Wand der Leitungskanal bzw. eine seiner Seiten von der Wand des Bauwerkes so weit abgehoben werden kann, dass nachträglich weitere Leitungen über die Öffnung eingelegt werden können.

Weiters ist es von Vorteil, wenn die der Wand des Bauwerkes zugewendete Seite des vorzugsweise U-förmigen Leitungskanals mit von den Enden der Schenkel ausgehend in Richtung zur Seitenmitte verlaufenden weiteren Schenkeln bzw. Fortsätzen versehen ist, zwischen deren Enden die Öffnung zum Einführen der Leitungen bzw. zum Aufschnappen des Leitungskanales auf bereits verlegte Leitungen frei gehalten ist. Durch diese auf die Leitungen eine Spannkraft ausübenden Schenkel erfolgt eine Fixierung der Leitungen im Leitungskanal, sodass bei der Montage ein unerwünschtes Austreten einzelner Leitungen aus der Öffnung vermieden wird. Diese Schenkel verstärken den Leitungskanal.

Der Leitungskanal besteht vorzugsweise aus mehreren, gegebenenfalls über Steck- bzw. Überschubmuffen miteinander verbundenen Abschnitten, wobei die Muffen entweder an einem Kanalende angeformt sein können oder als gesonderte Muffen ausgebildet sein können, die über die aneinander anstoßenden Kanalenden geschoben werden. Es können aber auch die Abschnitte stumpf aneinander stoßen.

Zweckmäßig weist der Leitungskanal einen polygonalen, z.B. trapezförmigen, vorzugsweise rechteckigen Querschnitt auf, kann aber auch eine andere polygonale Form besitzen, um den Querschnitt den zu verlegenden Leitungen anzupassen. Die zur Wand gerichtete Fläche des Leitungskanals fehlt oder weist die Öffnung zum Einlegen der Leitungen auf.

Da diese Leitungen in der Regel eine runden Querschnitt aufweisen, ist es aus Platz- und Stabilitätsgründen von Vorteil, wenn der Leitungskanal abgerundete und/oder abgeschrägte Ecken aufweist. Ein Leitungskanal kann eine beliebige Anzahl von Leitungen aufnehmen, z.B. vier, fünf, sechs, acht oder auch mehrere Leitungen.

In der Zeichnung ist die Erfindung anhand von Ausführungsbeispielen schematisch erläutert.

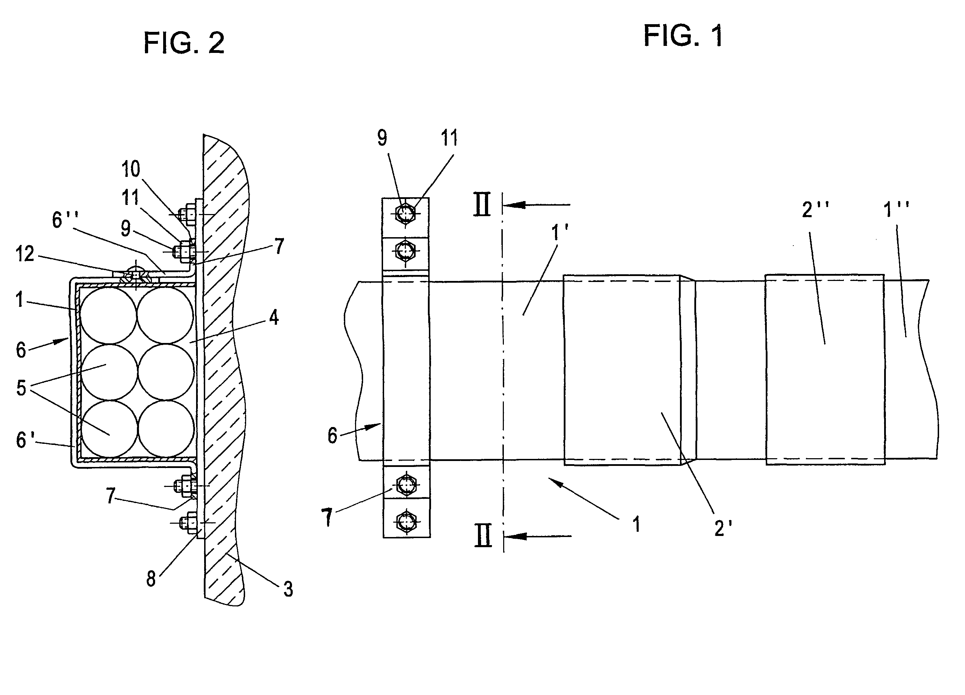

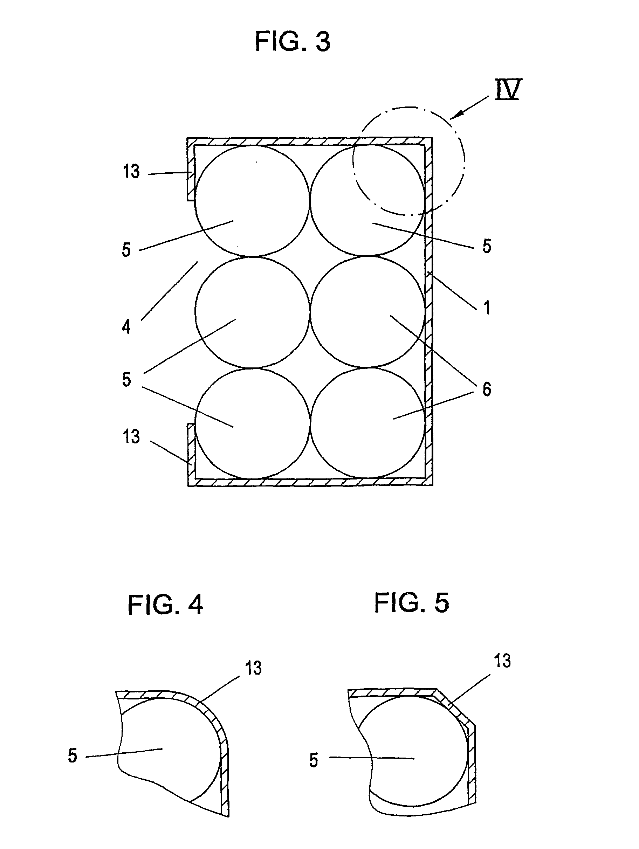

Fig. 1 zeigt die erfindungsgemäße Vorrichtung in Draufsicht und Fig. 2 stellt einen Schnitt nach der Linie II-II in Fig. 1 dar. Fig. 3 zeigt eine abgewandelte Ausführungsform des Leitungskanals. Fig. 4 und 5 zeigen Varianten des Details IV in Fig. 3.

Die erfindungsgemäße Vorrichtung zur Befestigung von Rohren, Schläuchen, Kabeln od.dgl., weist einen Leitungskanal 1 auf, der aus einzelnen Abschnitten 1', 1 ", 1'" zusammengesetzt ist, die vorzugsweise über eine Muffe, und zwar entweder durch die in Fig. 1 links gezeigte, am Leitungskanal angeformte Muffe 2' oder durch eine gesonderte Überschubmuffe 2" miteinander verbunden sind. Der Leitungskanal 1 wird an einer Wand 3 beispielsweise eines Abwasserkanals verlegt und weist an der dieser Wand 3 benachbarten Seite eine Öffnung 4 auf, über welche die Leitungen 5 in den Leitungskanal 1 eingelegt werden können. Zur Befestigung des Leitungskanals 1 dienen in Abstand voneinander angeordnete Montagebügel 6, die mit nach außen abstehenden Befestigungsflanschen 7 versehen sind, welche mit einer an der Wand 3 angeschraubten Grundplatte 8 verbunden sind. Die Verbindung erfolgt hierbei über von der Grundplatte 8 abstehende Schraubenbolzen 9, welche Löcher 10 in den Befestigungsflanschen 7 durchsetzen, und über auf die Schraubenbolzen 9 aufgeschraubte Muttern 11.

Der Montagebügel 6 besteht aus zwei Teilen 6', 6", die durch einen im wesentlichen senkrecht zur Leitungskanallängsrichtung verlaufenden Bolzen 12 schwenkbar verbunden sind. Diese Anordnung ermöglicht es, nach Entfernen der den Teil 6" des Montagebügels 6 fixierenden Mutter 11 und gegebenenfalls einem Lockern der unteren Mutter 11 und/oder Wegbiegen des Montagebügels 6 von der Wand 3, den Teil 6" des Montagebügels 6 zu verschwenken und den Leitungskanal 1 so weit von der Wand 3 zu entfernen, dass nachträglich in diesen Leitungskanal 1 zusätzliche Leitungen 5 eingelegt werden können. Der Montagebügel 6 und der Leitungskanal 1 müssen somit nicht von der Wand abgenommen werden.

Der Leitungskanal 1 besteht vorzugsweise aus Kunststoff, insbesondere aus PVC, wogegen der Montagebügel 6 vorzugsweise aus nicht rostendem Edelstahl besteht.

Anstelle des Bolzens 12 könnte auch eine Gewindestange mit (Flügel)Mutter vom Teil 6' getragen werden. Der Teil 6" ist mit seiner Ausnehmung auf die Gewindestange aufsetzbar und mit der (Flügel)Mutter befestigbar.

Der Querschnitt des Leitungskanals 1 ist vorzugsweise so bemessen, dass die von diesem Leitungskanal aufzunehmenden Leitungen 5 ohne Spiel in diesem Leitungskanal untergebracht werden können. Der in der Zeichnung dargestellte Leitungskanal 1 weist einen rechteckigen Querschnitt auf; es ist jedoch möglich, zur Anpassung des Querschnittes an die zu verlegenden, beispielsweise einen unterschiedlichen Durchmesser aufweisenden Leitungen 5 andere Querschnittsformen, insbesondere andere polygonale Querschnittsformen, vorzusehen. Die Montagebügel 6 sind an die Außenform des Leitungskanals 1 angepasst.

Bei der in Fig. 3 dargestellten Ausführungsform weist der Leitungskanal 1 an der der Wand 3 zugewendeten Seite von den Ecken ausgehend in Richtung zur Seitenmitte verlaufende Schenkel 13 auf, die eine Fixierung der im Leitungskanal angeordneten Leitungen 5 vor der Befestigung des Leitungskanals 1 an der Wand 3 mittels der Montagebügel 6 bewirken.

Um eine Anpassung des Querschnittes des Leitungskanals 1 an die zu verlegenden Leitungen 5 vorzunehmen, können die Ecken 13, wie in Fig. 4 dargestellt, abgerundet oder, wie in Fig. 5 dargestellt, abgeschrägt sein.

Die Grundplatte 8 kann zentral oder an den beiden Enden an der Wand 3 befestigt werden. Zur Befestigung der Grundplatte 8 sind in die Wand 3 Gewindestangen 22 eingesetzt, insbesondere in Dübel 23 eingeschraubt. Diese Gewindestangen 22 ragen aus der Wand 3 hervor, durchsetzen Löcher 24 in der Grundplatte 8 und nach dem Aufsetzen der Grundplatte 8 auf die Gewindestangen 22 wird die Grundplatte 8 auf den Gewindestangen 22 mit Muttern 25 festgeschraubt. Prinzipiell kann die Grundplatte 8 auch mit Gewindeschrauben, die in die Dübel 23 eingeschraubt werden, an der Wand 3 befestigt werden.

Bei einer Ausführungsform für eine verschwenkbare und/oder verschiebbare Befestigung des Teiles 6" des Montagebügels 6 an dem Teil 6' ist in dem Teil 6" ein Langloch mit Einstecköffnung ausgebildet. In das Langloch ist ein Zapfen einführbar, der gegen ein Austreten mit einer Endverdickung versehen ist. Der Teil 6" kann nunmehr relativ zum Teil 6' verschoben und/oder verschwenkt werden. Vorteilhafterweise ist das dem Befestigungsflansch 7 entfernt gelegene Ende des Langloches in einem derartigen Abstand vom Befestigungsflansch 7 gelegen, dass bei einem Anschrauben des Befestigungsflansches 7 an der Grundplatte 8 der Zapfen im Langloch in Richtung auf die Wand 3 bzw. den Befestigungsflansch 7 gedrückt wird, sodass der Montagebügel 6 mit einem entsprechenden Druck gegen den Leitungskanal 1 angelegt werden kann.

Ganz allgemein ist zu bemerken, dass eine ganz genaue Anpassung vom Montagebügel 6 an den Leitungskanal 1 nicht erfolgen muss; wesentlich ist, dass die Abmessungen des Leitungskanals und des Montagebügels 6 parallel zur Wand aneinander angepasst sind; die Schenkel des U-förmigen Montagebügels 6 können etwas kürzer gehalten sein als die entsprechenden Schenkel des Leitungskanals 1, da ein entsprechender Längenausgleich durch Beilagscheiben oder ähnliches Abstandsmaterial erreicht bzw. eingestellt werden kann.

Erfindungsgemäß erfolgt eine Montage von Leitungen 5 unter Zuhilfenahme der erfindungsgemäßen Vorrichtung in der folgenden Weise:

Es wird eine Grundplatte 8 an der Mauer montiert und es werden die Montagebügel 6 mit zumindest einem, insbesondere dem unteren Befestigungsflansch 7 an der Grundplatte 8 befestigt. Vorzugsweise werden die Montagebügel 6 mit beiden Befestigungsflanschen 7 und den entsprechenden Muttern 11 befestigt.

In einem folgenden Arbeitsschritt wird der Teil 6" des gesetzten Montagebügels 6 geöffnet, wozu nur die obere Mutter 11 abgeschraubt werden muss. Es wird sodann die erste Leitung 5 in den Montagebügel 6 gelegt und der Montagebügel 6 wieder geschlossen durch Aufschrauben der Mutter 11. Dieser Vorgang erfolgt insbesondere der Reihe nach für sämtliche gesetzte Montagebügel 6.

Daraufhin wird dieser Vorgang für die nächste einzulegende Leitung 5 wiederholt, bis sämtliche zu verlegende Leitungen 5 von den Montagebügeln 6 aufgenommen sind.

Nach Verlegen der letzten Leitung 5 werden die Montagebügel 6" durch Aufschrauben der Muttern 11 geschlossen.

Damit sind sämtliche Leitungen 5 verlegt.

Im folgenden wird zum Aufsetzen des Leitungskanals 1 bei einem ersten Montagebügel 6 der Teil 6" entfernt bzw. geöffnet und der zuvor bereits auf die verlegten Leitungen 5 aufgesetzte Leitungskanal 1 unter den geöffneten Montagebügel 6 verschoben bzw. eingeschoben. Daraufhin kann die Endbefestigung dieses Montagebügels 6 bzw. des Teiles 6" erfolgen.

Es werden nun weitere Leitungskanäle 1 gesetzt bzw. auf die Leitungen 5 aufgesetzt, indem diese, wenn sie aneinander stumpf anschließen, mit Überschubmuffen versehen bzw. verbunden werden oder, sofern Endmuffen an den Leitungskanälen 1 ausgebildet sind, werden die Endmuffen eines neu anzuschließenden Leitungskanals 1 auf das Ende eines verlegten bzw. bereits befestigten Leitungskanals 1 aufgesetzt.

Sobald ein zu verlegender Leitungskanal 1 wieder von einem Montagebügel 6 aufzunehmen ist, so wird der Montagebügel 6 auf die zuvor beschriebene Weise geöffnet und der Montagebügel nach seinem Aufsetzen auf die Leitungen 5 unter den geöffneten Montagebügel 6 verschoben.

Es kann aber auch so vorgegangen werden, dass nach der Verlegung sämtlicher Leitungen 5 ein Montagebügel 6 durch Lösen der beiden Muttern 11 vollständig entfernt wird, wobei die verlegten Leitungen 5 durch die benachbarten Montagebügel in ihrer Lage fixiert sind. Anschießend wird der Leitungskanal 1 auf die verlegten Leitungen 5 aufgeschoben, worauf der entfernte Montagebügel 6 wieder auf der Grundplatte mittels der Muttern 11 befestigt wird. In der Folge wird mit den benachbarten Montagebügeln 6 in gleicher Weise verfahren, bis die verlegten Leitungen 5 vollständig abgedeckt sind.

Vorteilhafterweise entspricht die Länge eines Leitungskanales 1 dem Mittenabstand zweier versetzter Montagebügel 6.

## Patentansprüche

1. Vorrichtung zur Befestigung von Leitungen (5), wie Rohren, Schläuchen, Kabel, od.dgl., an Wänden (3) von Bauwerken, beispielsweise an der Innenwand von Abwasserkanälen, mit einem die Leitungen (5) aufnehmenden Leitungskanal (1), der an seiner der Wand (3) des Bauwerkes zugewendeten Seite eine Öffnung (4) aufweist, und über in Leitungskanallängsrichtung in Abstand voneinander an der Wand (3) befestigbare Montagebügel (6) fixierbar ist, wobei die Montagebügel (6) den Leitungskanal (1) an den übrigen Seiten außen umschließen und mit abstehenden Befestigungsflanschen (7) versehen sind, **dadurch gekennzeichnet, dass** die Montagebügel (6) aus zwei miteinander verbundenen Teilen (6',6") bestehen, die miteinander schwenkbar und/oder verschiebbar verbunden sind.

2. Vorrichtung nach Anspruch 1, **dadurch gekennzeichnet, dass** der Leitungskanal (1) die Querschnittform eines U, gegebenenfalls mit nach innen abgebogenen Schenkelenden (13), aufweist.

3. Vorrichtung nach Anspruch 1 oder 2, **dadurch gekennzeichnet, dass** eine an der Wand (3) des Bauwerkes befestigbare bzw. angeordnete Grundplatte (8) vorgesehen ist, an welcher die Befestigungsflansche (7) lösbar befestigt sind.

4. Vorrichtung nach Anspruch 3, **dadurch gekennzeichnet, dass** von der Grundplatte (8) abstehende Bolzen, insbesondere Schraubenbolzen (9), vorgesehen sind, die Löcher (10) in den Befestigungsflanschen (7) durchsetzen.

5. Vorrichtung nach einem der Ansprüche 1 bis 4, **dadurch gekennzeichnet, dass** die Schwenkachse im wesentlichen senkrecht zur Leitungslängsrichtung und parallel zur Grundplatte (8) verläuft.

6. Vorrichtung nach einem der Ansprüche 1 bis 4, **dadurch gekennzeichnet, dass** in einem Teil (6") ein Langloch ausgebildet und vom anderen Teil (6') ein vom Langloch aufgenommener Zapfen getragen ist.

7. Vorrichtung nach einem der Ansprüche 1 bis 6, **dadurch gekennzeichnet, dass** die der Wand (3) zugewendete Seite des Leitungskanals (1) mit von den Ecken ausgehend in Richtung zur Seitenmitte verlaufenden Schenkeln (13) versehen ist, wobei zwischen den Schenkelenden die Öffnung (4) zum Einführen der Leitungen (5) freigehalten ist.

8. Vorrichtung nach einem der Ansprüche 1 bis 7, **dadurch gekennzeichnet, dass** der Leitungskanal (1) mehrere, gegebenenfalls über Muffen (2', 2") miteinander verbundene, Abschnitte (1', 1") umfasst, wobei die Abschnitte (1', 1") stumpf aneinander stoßen oder in einem ihrer Endbereiche eine Steck- bzw. Überschubmuffe (2') aufweisen, mit der sie über das Ende des jeweils anschließenden Leitungskanals (1) schiebbar sind.

9. Vorrichtung nach einem der Ansprüche 1 bis 8, **dadurch gekennzeichnet, dass** der Leitungskanal (1) einen polygonalen, vorzugsweise rechteckigen Querschnitt aufweist, wobei der Leitungskanal (1) gegebenenfalls abgerundete und/oder abgeschrägte Ecken aufweist.

10. Vorrichtung nach einem der Ansprüche 1 bis 9, **dadurch gekennzeichnet, dass** der Montagebügel (6) die Querschnittsform eines U aufweist und von dem Ende der Schenkel des U jeweils ein Befestigungsflansch (7) nach außen absteht.

## Claims

1. Device for fixing lines (5), like pipes, tubes, cables etc. to walls (3) of buildings, e.g. to the inner wall of sewers, with a line channel (1) taking up the lines (5), the line channel (1) having an opening (4) on its side faced towards the wall (3) of the building, the line channel (1) being fixable via mounting devices (6) that are fixable to the wall (3) in longitudinal direction of the channel and that are spaced from each other, said mounting devices (6) encompassing the line channel (1) on the other sides and being provided with protruding fixing flanges (7), **characterized in that** the mounting devices (6) consist of at least two parts (6',6') connected to each other said parts being connected to each other in a swivelling and/or movable way.

2. Device according to claim 1, **characterized in that** the line channel (1) has a U-profile, especially with inwardly bent ends (13).

3. Device according to claim 1 or 2, **characterized in that** a base plate (8) is provided said fixing flanges (7) are detachably connected to, said base plate (8) being attachable or arranged to the wall (3) of the building.

4. Device according to claim 3, **characterized in that** bolts, especially screw bolts (9), protruding from the base plate (8) are provided, said bolts going through openings (10) in the fixing flanges (7).

5. Device according to claims 1 to 4, **characterized in that** the swivelling axis is aligned substantially square to the direction of the lines and parallel to the base plate (8).

6. Device according to claims 1 to 5, **characterized in that** an elongated hole is provided in a part (6") and that a pin taken up from said elongated hole is carried from another part (6').

7. Device according to claims 1 to 6, **characterized in that** the side of the line channel (1) faced towards the wall (3) is provided with ends (13) that emerge from the corners and go towards the center of the ends, the opening (4) between the ends being kept free to introduce the lines (5).

8. Device according to claims 1 to 7, **characterized in that** the line channel (1) provides several connected portions (1',1"), especially connected via couplers (2', 2"), said portions (1',1") being butt-jointed or having a plug- or covering coupler (2') in one of its end regions, being movable over the end of each adjacent line channel (1) with said coupler.

9. Device according to claims 1 to 8, **characterized in that** the line channel (1) has a polygonal, especially right-angled cross section, the line channel (1) especially having rounded and/or bevelled edges.

10. Device according to claims 1 to 9, **characterized in that** the mounting devices (6) has a U-shaped cross section and that a fixing flange (7) protrudes outwardly from each of the ends of the U.

## Revendications

1. Dispositif de fixation de conduites (5), comme des tubes, des tuyaux, des câbles ou pareil, aux parois (3) des bâtiments, par exemple à la paroi intérieure des canaux des eaux d'égout, comprenant un canal de conduite (1) recevant les conduites (5), qui présente une ouverture (4) au côté tourné vers la paroi (3) du bâtiment, et qui peut être fixé par des brides de montage (6) capables d'être fixés à la paroi (3) en étant espacées l'une de l'autre selon la direction longitudinale du canal de conduite, lesdites brides de montage (6) entourant l'extérieur des autres côtés du canal de conduite (1) et étant munies des collerettes saillantes de fixation (7), **caractérisé en ce que** les brides de montage (6) consistent en deux parties reliées l'une à l'autre (6', 6"), qui sont reliées entre eux d'une manière pivotante et/ou translatable.

2. Dispositif selon la revendication 1, **caractérisé en ce que** le canal de conduite (1) comprend la forme en coupe transversale d'un U, le cas échéant avec des bouts d'ailes (13) pliés à l'intérieur.

3. Dispositif selon la revendication 1 ou 2, **caractérisé en ce qu'**une plaque de montage (8) attachable ou disposée à la paroi (3) du bâtiment est prévue, à laquelle on peut fixer les collerettes de fixation (7) d'une manière détachable.

4. Dispositif selon la revendication 3, **caractérisé en ce que** des boulons, particulièrement des boulons filetés (9), faisant saillie de la plaque de montage (8) sont prévus, qui pénètrent dans les trous (10) des collerettes de fixation (7).

5. Dispositif selon une quelconque des revendications 1 à 4, **caractérisé en ce que** l'axe de pivotement s'étend essentiellement perpendiculairement à la direction longitudinale des conduits et parallèlement à la plaque de montage (8).

6. Dispositif selon une quelconque des revendications 1 à 4, **caractérisé en ce qu'**un trou longitudinal est formé dans une partie (6"), tandis qu'un tenon reçu dans le trou longitudinal est supporté par l'autre partie (6').

7. Dispositif selon une quelconque des revendications 1 à 6, **caractérisé en ce que** le côté du canal de conduite (1) tourné vers la paroi (3) est pourvu des ailes (13), qui, en sortant des coins, s'étendent au milieu du côté, l'ouverture (4) pour insérer les conduites (5) étant libre entre les bouts d'ailes.

8. Dispositif selon une quelconque des revendications 1 à 7, **caractérisé en ce que** le canal de conduite (1) comprend plusieurs tronçons (1', 1 ") reliés, le cas échéant, l'un à l'autre par des manchonnages (2', 2"), les tronçons (1', 1") étant raboutés bout à bout ou bien comprennent un manchonnage enfichable ou couvre-joint (2'), avec lequel ils peuvent être glissés sur le bout du canal de conduite (1) relié respectif.

9. Dispositif selon une quelconque des revendications 1 à 8, **caractérisé en ce que** le canal de conduite (1 ) comprend une forme polygonale, préférablement rectangulaire, en coupe transversal, le canal de conduite (1) comprenant, le cas échéant, des coins arrondis et/ou chanfreinés.

10. Dispositif selon une quelconque des revendications 1 à 9, **caractérisé en ce que** la bride de montage (6) a une forme en coupe transversale d'un U, une collerette (7) de fixation faisant saillie vers l'extérieur de chaque bout des ailettes d'U.
